# EUROPÄISCHE PATENTSCHRIFT

(11) **EP 0 847 823 B1**
(45) Veröffentlichungstag und Bekanntmachung des Hinweises auf die Patenterteilung: **02.02.2000**
(21) Anmeldenummer: 97117991.6
(22) Anmeldetag: 17.10.1997
(51) Int. Cl.: B23K 1/19

(54) **Verfahren zum Verbinden von Bauteilen aus Stahl**
Steel workpieces fixing method
Méthode pour fixer des éléments d'acier

(30) Priorität: 13.12.1996 DE 19651802
(43) Veröffentlichungstag der Anmeldung: 17.06.1998
(73) Patentinhaber: BENTELER AG, D-33104 Paderborn (DE)
(72) Erfinder: Lange, Fritz, 33178 Borchen (DE); Bangen, Michael, 59494 Soest (DE)
(74) Vertreter: Ksoll, Peter, Dr.-Ing.

(56) Entgegenhaltungen:
- GB-A- 2 246 091
- US-A- 4 349 145
- "New coating method enables brazing of stainless steel" THE OIL AND GAS JOURNAL, Bd. 64, Nr. 8, 21.Februar 1966, XP002058247

## Beschreibung

Die Erfindung betrifft ein Verfahren zum Verbinden von Bauteilen aus Stahl gemäß dem Oberbegriff des Anspruchs 1. Ein solches Verfahren ist aus der GB-A-2 246 091 bekannt.

Es ist bekannt, metallische Werkstücke bzw. Bauteile durch Schweißen oder Löten miteinander zu verbinden.

Beim Löten werden die Bauteile durch ein aufgeschmolzenes Zusatzmetall (Lot) als Fügewerkstoff aneinander gefügt. Das Lot hat niedrigere Schmelztemperatur als die zu verbindenden Bauteile, die vom Lot benetzt werden, ohne zu schmelzen. Durch Löten lassen sich gleiche oder verschiedenartige metallische Werkstoffe fest, dicht und leitfähig verbinden.

Schweißen ist ein thermisches Fügen, bei dem das Vereinigen von Werkstoffen in flüssigem oder plastischem Zustand unter Anwendung von Wärme und/oder Kraft ohne oder mit Fügewerkstoff erfolgt.

Die bekannten Fügeverfahren haben sich bewährt und einen hohen technologischen Stand erreicht. Ein generelles Bestreben der Praxis besteht in der Verbesserung der bekannten Fügeverfahren.

Es ist daher Aufgabe der Erfindung, ein Fügeverfahren zu schaffen, welches eine qualitativ hochwertige Verbindung von Bauteilen aus Stahl gewährleistet und bei dem der Einsatz von Fügewerkstoff verfahrensmäßig optimiert ist.

Erfindungsgemäß wird diese Aufgabe durch das im Anspruch 1 charakterisierte Verfahren gelöst.

Kerngedanke der Erfindung bildet ein zweistufiges kombiniertes Schweiß-/Lötverfahren. Hierbei werden die Bauteile zunächst positioniert und unter Verwendung eines aus einer Kupferlegierung oder Reinkupfer bestehenden Fügewerkstoffs untereinander schweißtechnisch fixiert. Anschließend werden die Bauteile so weit erwärmt, bis ein Aufschmelzen und damit eine Verflüssigung des aufgetragenen Fügewerkstoffs erfolgt. Die Erwärmung wird unter Schutzgasatmosphäre vorgenommen. Zusätzlicher Fügewerkstoff ist für diesen Verfahrensschritt nicht erforderlich. Der Fügewerkstoff diffundiert dabei im Verbindungsbereich teilweise in das Grundmaterial der Stahlbauteile ein und sorgt für eine feste und dichte Verbindung zwischen den Bauteilen.

Durch die Kapillarwirkung zwischen den einander gegenüberliegenden Flächen der Bauteile im Verbindungsbereich erfolgt eine Ausbreitung des Fügewerkstoffs und eine Benetzung der Bauteile mit dem Fügewerkstoff. Hierdurch entsteht eine vollflächige Lotverbindung. Die Schutzgasatmosphäre unterstützt die Kapillarwirkung.

Die Kapillarwirkung ist um so größer, je geringer die Spaltbreite zwischen den zu verbindenden Bauteilen ist. Bei richtig bemessener Spaltbreite wird der Fügewerkstoff in den Fügespalt hinein gezogen. Es entsteht ein kapillarer Fülldruck, der den Fügewerkstoff auch gegen die Schwerkraft in einen Spalt hochziehen kann.

In Abhängigkeit von der Verarbeitungstemperatur tritt die Diffusion einer oder mehrerer Komponenten des Fügewerkstoffs in den Stahlwerkstoff der Bauteile und umgekehrt ein. Der Fügewerkstoff dringt in das Gefüge des Stahlwerkstoffs, löst einen Teil davon und bildet eine Legierung.

Als besonders vorteilhaft hat sich eine Erwärmung auf Temperaturen zwischen 800 °C und 1200 °C erwiesen. Es entsteht dann eine hochfeste Hartlotverbindung der Bauteile.

Der Fügewerkstoff wird zweckmäßigerweise durch einen Schweißdraht auf Kupferbasis (Kupferlegierung) bereitgestellt. Denkbar ist auch die Verwendung von Kupfer (99,9 % Cu, sauerstoffrei) oder auch die Verwendung von Kupferbronze oder Kupfermessing.

Zweckmäßigerweise erfolgt die Fixierung im ersten Verfahrensschritt durch Auftrag von kurzen Nähten oder punktweisen Auftrag des Fügewerkstoffs. Die Menge an Fügewerkstoff wird verfahrensgemäß auf die Konfiguration der herzustellenden Verbindung vorbestimmt, insbesondere auf deren Geometrie sowie die Fügespaltbreite, -länge und -tiefe.

In geeigneten Kühlzonen kann der Fügewerkstoff erschütterungsfrei erstarren. Beim Erstarren wird der flüssige Fügewerkstoff zunächst breiig und anschließend fest. Die hergestellte Verbindung erreicht dann die gleiche Festigkeit wie der Grundwerkstoff der verbundenen Stahlbauteile.

Ein wesentlicher Vorteil des erfindungsgemäßen Verfahrens ist, daß ein zusätzliches Aufbringen von Kupferlot im zweiten Verfahrensschritt nicht erforderlich ist. Dies führt nicht nur zu einem verfahrensmäßig rationellen Arbeitsprozeß, sondern auch zu einer Verringerung der erforderlichen Menge an Fügewerkstoff.

Weiterhin zeichnet sich die hergestellte Verbindung durch ihre hohe Qualität, Festigkeit und Alterungsbeständigkeit aus.

Das erfindungsgemäße Verfahren ist für die Verbindung unterschiedlichster Bauteile aus Stahl geeignet. Als besonders vorteilhaft wird die Anwendung bei der Verbindung von Abgängen bzw. Stutzen an Rohren angesehen. So können beispielsweise im ersten Verfahrensschritt mehrere Rohrstutzen am Rohr fixiert und dann gemeinsam im anschließenden Verfahrensschritt endgefügt werden.

## Patentansprüche

1. Verfahren zum Verbinden von Bauteilen aus Stahl, wobei die Bauteile zunächst positioniert und unter Verwendung eines aus einer Kupferlegierung oder Reinkupfer bestehenden Fügewerkstoffs untereinander mindestens bereichsweise schweißtechnisch fixiert werden, dadurch gekennzeichnet, daß danach unter Schutzgasatmosphäre eine Erwärmung der Bauteile bis zum Aufschmelzen des aufgetragenen Fügewerkstoffs vorgenommen wird, wobei der Fügewerkstoff teilweise in die Bauteile im Verbindungsbereich eindiffundiert und anschließend erstarrt.

## Claims

1. A method of connecting steel components, the components first being positioned and being fixed together at least in zones by welding technology, using a jointing material consisting of a copper alloy or pure copper, characterised in that the components are then heated in a protective gas atmosphere until the applied jointing material melts, the jointing material partially diffusing into the components in the connecting zone and then solidifying.

## Revendications

1. Procédé pour assembler des éléments de construction en acier, dans lequel les éléments de construction sont d'abord positionnés et fixés entre eux au moins ou sur certaines zones par une technique de soudage en utilisant un matériau d'assemblage ou d'apport constitué par un alliage de cuivre ou par un cuivre pur, caractérisé en ce que, sous une atmosphère de gaz protecteur ou inerte, on procède au chauffage des éléments de construction jusqu'à la fusion du matériau d'assemblage appliqué, le matériau d'assemblage ou d'apport diffusant partiellement à l'intérieur des éléments de construction dans la zone d'assemblage et se solidifiant ensuite.
